# EUROPEAN PATENT APPLICATION

(11) **EP 4 844 580 A1**
(43) Date of publication of application: **25.11.2026**
(21) Application number: 26180295.3
(22) Date of filing: 21.05.2026
(51) Int. Cl.: G06F 9/50

(54) **PROCESSING ORDERS USING DEDICATED CORES**

(30) Priority: 21.05.2025 US 202519214289
(71) Applicant: Cboe Exchange, Inc., Chicago, IL 60607 (US)
(72) Inventor: Lipscomb, Timothy, Chicago, IL, 60607 (US); Samman, Luca, Chicago, IL, 60607 (US); Chmielewski, Cole Michael, Chicago, IL, 60607 (US); Rose, Paul Douglas, Chicago, IL, 60607 (US); Kapur, Aditya, Chicago, IL, 60607 (US); Ratterman, Phillip John, Chicago, IL, 60607 (US)
(74) Representative: Fish & Richardson P.C.

(57) **Abstract**

Methods, systems, and apparatus, including computer programs encoded on a computer storage medium, for processing orders using dedicated cores. In one aspect, a method comprises determining that a core of a plurality of cores of a server is to be designated as a dedicated core; based on determining that the core of the plurality of cores of the server is to be designated as a dedicated core, designating the core of the plurality of cores of the server as the dedicated core; and assigning the dedicated core to an order handler process associated with a sponsoring entity, wherein the dedicated core is (i) used by the order handler process associated with the sponsoring entity to process orders received from the sponsoring entity, and (ii) not shared by order handler processes associated with non-sponsoring entities.

## Description

### CROSS-REFERENCE TO RELATED APPLICATIONS

This application claims the benefit of priority to U.S. Patent Application No. 19/214,289, filed on May 21, 2025, which is a continuation-in-part application of, and claims priority to, U.S. Patent Application No. 18/941,853, filed on November 8, 2024, which claims the benefit of the filing dates of U.S. Provisional Application No. 63/548,128, filed on November 10, 2023, and U.S. Provisional Application No. 63/631,695, filed on April 9, 2024. The disclosure of the foregoing applications are incorporated here by reference.

### FIELD

This specification generally relates to the allocation and management of cores on computer servers.

### BACKGROUND

Many enterprises rely on computer systems to process orders on a regular basis. Sometimes, processing orders may require more computational power than the enterprise is able to access in-house. For example, processing orders may involve millions of complex calculations, the integration of multiple different data sources, and/or high-speed or high-frequency transactions.

Enterprises may therefore outsource orders to be processed at an external order processing system. An order processing system may have more advanced technology that can provide the computational power required to process the orders.

### SUMMARY

This specification describes technologies for processing orders on a system that includes dedicated cores, which are cores that are used predominantly or exclusively by an order handler process to execute orders from a sponsoring entity associated with the order handler process. These technologies generally involve a system with multiple cores for processing orders distributed across multiple servers. When the system receives an indication from a sponsoring entity that each of the orders sent by the sponsoring entity is to be executed on a dedicated core, the system can determine to designate one or more cores as dedicated cores. The system can make this determination using information about various components of the system indicating the status of the various components. Based on the information, the system designates one or more cores in the system as dedicated cores, including assigning each of the one or more dedicated cores to one or more order handler processes associated with the sponsoring entity.

The system receives orders from the sponsoring entity for processing. After an order is received, the system determines that the received order is to be executed on one of the dedicated cores assigned to the one or more order handler processes associated with the sponsoring entity. This determination process takes the place of an identification of a core on which the order is to be executed by an operating system of a server included in the system. The order handler process to which the dedicated core is assigned can then execute the received order on the dedicated core.

According to a first aspect there is provided a computer-implemented method including determining that a core of a plurality of cores of a server is to be designated as a dedicated core; based on determining that the core of the plurality of cores of the server is to be designated as a dedicated core, designating the core of the plurality of cores of the server as the dedicated core; and assigning the dedicated core to an order handler process associated with a sponsoring entity, wherein the dedicated core is (i) used by the order handler process associated with the sponsoring entity to process orders received from the sponsoring entity, and (ii) not shared by order handler processes associated with non-sponsoring entities. Other embodiments of this aspect include corresponding computer systems, apparatus, and computer programs recorded on one or more computer storage devices, each configured to perform the actions of the methods.

The foregoing and other embodiments can each optionally include one or more of the following features, alone or in combination. In particular, one embodiment includes all the following features in combination.

In some implementations, the method also includes receiving, by the order handler process, an order from the sponsoring entity; determining that the order handler process is to execute the received order on the dedicated core, including skipping identification of a core on which to execute the order by an operating system of the server.

In some implementations, determining that a core of a plurality of cores of a server is to be designated as a dedicated core includes identifying the server from among one or more servers. In such implementations, identifying the server from among one or more servers can include identifying the server based on one or more orders received by order handler processes executing orders on cores of the one or more servers. In such implementations, identifying the server from among one or more servers can include identifying the server based on data related to the one or more servers. In such implementations, identifying the server from among one or more servers can include identifying the server based on communications from one or more downstream processors. In such implementations, identifying the server from among one or more servers can include identifying the server based on a mapping indicating connections between the one or more servers and one or more downstream processors.

In some implementations, all order handler processes executing orders on the server execute orders on dedicated cores. In some implementations, designating the core as the dedicated core includes designating the core based on data related to one or more cores of the server. In some implementations, designating the core as the dedicated core includes designating the core based on a randomization algorithm.

In some implementations, a dedicated core is used by the order handler process associated with the sponsoring entity to process orders received from the sponsoring entity for a specified period of time. In such implementations, the specified period of time can be one day.

Particular embodiments of the subject matter described in this specification can be implemented so as to realize one or more of the following advantages.

First, the techniques described herein facilitate operation of an order processing system that includes dedicated cores. A dedicated core is a core on which a single order handler process associated with a particular sponsoring entity executes orders for a specified period of time. During the specified period of time, there is a restriction on which order handler processes can execute orders on the dedicated core. For example, the restriction can be that no other order handler processes execute orders on the dedicated core during the specified period of time.

The capacity of an order processing system to process orders on dedicated cores can help to reduce latency, enhance throughput and improve performance of the system overall because the system can utilize a fixed proportion of the processing power of a dedicated core to process orders on the dedicated core. For example, the system may not be able to use a sufficiently large proportion of the processing power of a core to process orders that are not processed on dedicated cores, which can result in longer processing times for such orders, increase latency in processing such orders, or both. Additionally, the assignment of order handler processes to dedicated cores can improve transparency to the sponsoring entities with which the order handler processes are associated.

Second, the techniques described herein can optimize the efficiency with which a system including dedicated cores processes orders. Using the techniques described herein, the system can receive information about multiple components of the system and determine to designate a core of a server as a dedicated core, designate a core on the server as the dedicated core, or both, based on the received information. For example, the system can use information relating to the status of its multiple components, as well as how the multiple components interact with one another, to determine a designation of cores that will optimize the efficiency of the system, designate a core in a way that will optimize the efficiency of the system, or both.

The techniques described herein can further optimize the efficiency with which a system including dedicated cores processes orders by allowing an operating system included in the system to skip an operation of identifying a core on which an order is to be executed. Skipping this operation of identification of a core by an operating system included in the system can increase the efficiency with which the system processes orders by reducing a number of communications between components of the system (e.g., communications to and from the operating system), reducing a number of operations performed by the system, or both, as the system processes orders to be executed on dedicated cores. For example, bypassing the operating system in this way can reduce latency and increase throughput for orders that are processed by the system on dedicated cores.

The techniques described herein can further optimize the efficiency with which a system including dedicated cores processes orders by distributing the assignment of dedicated cores to order handler processes between at least two different components of the system. For example, a set of web tools included in the system can identify a server of which a core is to be designated as a dedicated core using information communicated to the set of web tools by various components of the system. A server manager of the identified server can then designate a core of a plurality of cores of the server as a dedicated core using information that it collects from one or more cores of the identified server and assign the dedicated core to an order handler process.

The use of information by different system components can increase a likelihood that the assignment of a dedicated core to an order handler process helps to optimize the performance of the system. Additionally, the distribution of the assignment process between multiple system components can help to reduce the quantity of information required to be processed by any one system component (e.g., the set of web tools or server manager), increasing the efficiency of processing information and also reducing the likelihood of overloading a system component.

Third, some implementations of the techniques described herein allow for the system to use a randomization algorithm to designate a core on a particular server as a dedicated core. The randomization algorithm can reduce a likelihood that the same dedicated core is assigned to the same order handler process for an extended period of time. In this way, the randomization algorithm can increase the efficiency with which the system processes orders by spreading the distribution of the workload of the system more evenly among the dedicated cores of the system.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example order processing system.
FIG. 2 is a flow diagram illustrating interactions between components of an example order processing system during an example process for designating cores.
FIG. 3 is a flow diagram of an example process for designating cores carried out by an example order processing system.

Like reference numbers and designations in the various drawings indicate like elements.

### DETAILED DESCRIPTION

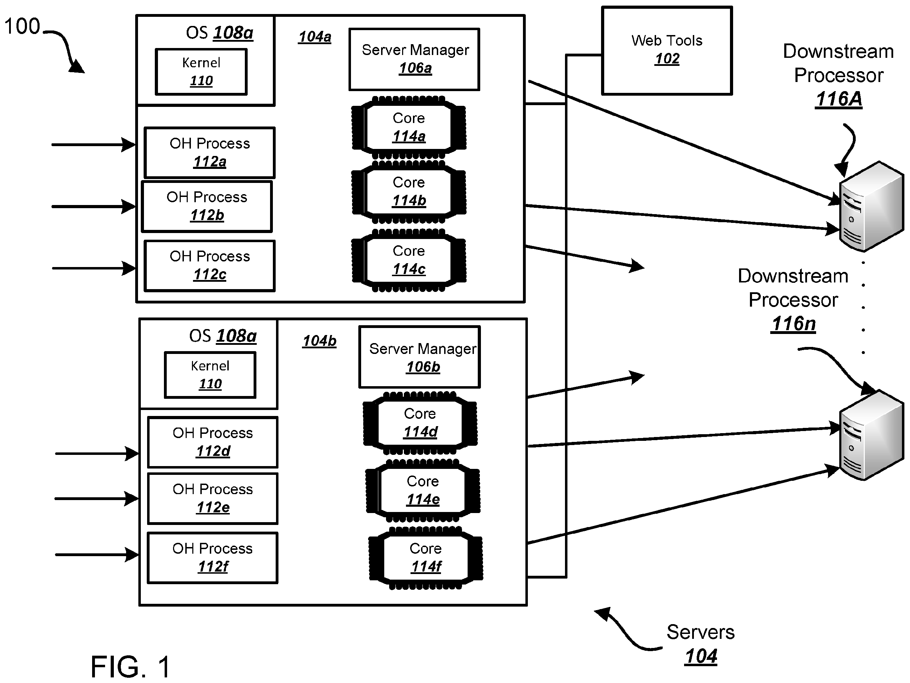

FIG. 1 is a block diagram of an example order processing system 100. The order processing system 100 includes a set of web tools 102, a set of servers 104, and one or more downstream processors 116.

In general, the order processing system 100 can process orders using dedicated cores that are included in the system. Dedicated cores are cores that are used predominantly or exclusively by an order handler process to execute orders from a sponsoring entity associated with the order handler process. In several examples, this specification refers to a "dedicated core" as being a single core. In other examples, however, a "dedicated core" can refer to multiple cores, or to a group of cores, that operate in accordance with the same principles as single dedicated cores operate.

For example, the order processing system 100 can include multiple cores for processing orders that are distributed across multiple servers of the set of servers 104. When the order processing system 100 receives an indication from a sponsoring entity that each of the orders sent by the sponsoring entity is to be executed on a dedicated core, the set of web tools 102 can determine to designate a core of a plurality of cores of a server of the set of servers 104 as a dedicated core. The set of web tools 102, a server manager of the server, or both, can designate a core as a dedicated core using information about various components of the system indicating the status of the various components, as described below. The server manager of the server can assign the dedicated core to one or more order handler processes associated with the sponsoring entity. The one or more downstream processors 116 process results from orders that are executed on the cores of the order processing system 100.

Each server of the set of servers 104 includes a server manager 106, an operating system (OS) 108, one or more order handler processes 112, and one or more cores 114. Each OS 108 includes a kernel 110. The illustration of FIG. 1 depicts two servers in the set of servers, e.g., servers 104a and 104b. The illustration of FIG. 1 depicts three order handler processes 112 on the server 104a, e.g., the order handler processes 112a, 112b, and 112c. The illustration of FIG. 1 depicts three order handler processes 112 on the server 104b, e.g., the order handler processes 112d, 112e, and 112f.

The illustration of FIG. 1 depicts three cores 114 on the server 104a, e.g., the cores 114a, 114b, and 114c. The illustration of FIG. 1 depicts three cores 114 on the server 104b, e.g., the cores 114d, 114e, and 114f. The illustration of FIG. 1 depicts n downstream processors 116 included in the order processing system 100, e.g., downstream processors 116A - 116n, where n is any integer. However, the illustration is exemplary and the set of servers 104 can include any suitable number of servers, and each server 104 of the order processing system 100 can include any suitable number of order handler processes 112 and any suitable number of cores 114. The order processing system 100 can also include any suitable number of downstream processors 116.

The order processing system 100 is illustrative of any number of different types of systems that employ one or more servers 104 to process orders. The system receives orders from sponsoring entities (e.g., users of the order processing system 100), processes the orders on servers 104, and transmits results of the processed orders to downstream processors 116, which further process the results.

For example, the order processing system 100 can be a global weather simulation system. In this example, sponsoring entities can be different entities that predict global weather patterns. Each entity can collect data about the weather. The entity can send orders to the global weather simulation system to compute weather simulation results based on the collected data. Upon computation, the simulation results can be sent to downstream processors, which can process the results to produce a global simulation of the weather.

As another example, the order processing system 100 can be a system for processing orders to exchange financial instruments. In this example, sponsoring entities can be different clients that desire to trade financial instruments on a given exchange system. Clients can be broker systems that receive requests for trades. Each client places an order for a given trade to be made within the exchange system. For example, in the context of a stock exchange, the order can specify which stock to trade, the quantity of stock to be traded, and/or an algorithm for determining the stock to be traded (e.g., trading an amount up to a certain limit, trading an amount if the specified amount is available, etc.). The clients can send requests to be matched by servers in the system. The matched orders can be sent to downstream processors, which can settle any trades specified in the matched orders.

As another example, the order processing system 100 can be a system for processing tasks that require a machine learning model that must perform a large quantity of calculations, such as video point tracking. In this example, sponsoring entities can be different entities that desire to perform tasks that require machine learning. Each entity can collect data that can be used to train a machine learning model. The entity can send requests for servers in the system to train a machine learning model based on the collected data and to make inferences based on the trained model. The trained model and/or the inferences produced by the trained model can be sent to downstream processors, which can employ the trained model and/or the inferences produced by the trained model for additional tasks.

Systems that employ one or more servers to process orders, such as those described above, can include multiple cores distributed over its one or more servers. As used herein, the term "core" may refer to a single core, or a set of one or more cores. Cores are used in a variety of contexts to perform tasks that require high computational power, tasks that require high processing speeds, or tasks requested by sponsoring entities that desire transparency regarding the performance of the tasks. For example, the order processing system 100 includes cores 114 distributed over the set of servers 104.

Each order handler process of the order handler processes 112 included in the order processing system 100 processes, or executes, orders received by the order processing system 100 using a core 114 included in the system. In some implementations, an order handler process can execute orders using one or more cores. Each order handler process 112 is associated with a sponsoring entity. A sponsoring entity associated with an order handler process is a user of the system that sends orders to the system to be processed, such that the orders sent by the sponsoring entity are processed using the order handler process. As examples, sponsoring entities can be entities that perform weather simulations, clients trading financial instruments on an exchange system, or entities requiring tasks to be performed by machine learning models. The sponsoring entity can indicate a desire to use the system to process orders, e.g., by sending orders to the system to be processed. In response, the system can associate an order handler process included in the system with the sponsoring entity. In some examples, the system can associate one or more order handler processes included in the system with the sponsoring entity.

In some examples, once an order handler process has been associated with a sponsoring entity, the order handler process only processes orders that are received from the sponsoring entity, e.g., the order handler process does not process orders that are received from other sponsoring entities different from the sponsoring entity. In other examples, once an order handler process has been associated with a sponsoring entity, the order handler predominantly processes orders that are received from the sponsoring entity but can also process orders from other entities.

As used herein, the term "non-sponsoring entity" used with respect to a given order handler process refers to a user of the system that is not associated with the given order handler process, e.g., that is associated with an order handler process different from the given order handler process.

Orders sent by sponsoring entities can be any tasks that require large amounts of computational power, tasks that require high processing speeds, or tasks requested by sponsoring entities that desire transparency regarding the processing of the orders. Such tasks can be tasks that require high-speed or high-frequency processing, tasks that involve large quantities of complex calculations, or tasks that require integration of multiple data sources. For example, orders can be computations of complex weather simulations based on collected data, or the matching of orders to trade financial instruments.

Each order handler process of the order handler processes 112 can be assigned to a particular server of the set of servers 104. For example, in the illustration of FIG. 1, the order handler processes 112a, 112b, and 112c are assigned to the server 104a. Likewise, in the illustration of FIG. 1, the order handler processes 112d, 112e, and 112f are assigned to the server 104b. In some implementations, the set of web tools 102 can assign each order handler process to a particular server. An order handler process assigned to a particular server processes orders using cores included in the particular server and does not use cores included in other servers to process orders. In some examples, the OS 108 of each server 104 can identify cores of the server 104 on which the order handler processes assigned to the server are to execute orders once the orders have been received by the order handler processes, as described in further detail below.

One or more cores of the cores 114 can be dedicated cores. A dedicated core is a core that is used by a particular order handler process associated with a particular sponsoring entity to execute orders received from the particular sponsoring entity. When a dedicated core is being used by the particular order handler process associated with the particular sponsoring entity, there are one or more restrictions on other order handler processes that can use the dedicated core. In some implementations, an example restriction can be that the dedicated core is not used by any other order handler process except for the particular order handler process. In some implementations, a restriction can be that the dedicated core is used only by other order handler processes that are associated with same sponsoring entity with which the particular order handler process is associated.

One or more cores of the cores 114 can be shared cores, which are cores that are shared by one or more order handler processes associated with one or more different sponsoring entities. For example, more than one order handler process, each associated with different sponsoring entities, can be executing orders on a shared core simultaneously. A dedicated core cannot be a shared core, and a shared core cannot be a dedicated core.

In some implementations, dedicated cores can be dedicated portions of cores (i.e., portions of cores used by an order handler process associated with a sponsoring entity to execute orders received from the sponsoring entity), dedicated servers or groups of servers (i.e., servers or groups of servers of which all the cores are used by an order handler process associated with a sponsoring entity to execute orders received from the sponsoring entity) or dedicated data centers (i.e., data centers used by an order handler process associated with a sponsoring entity to execute orders received from the sponsoring entity). More generally, in some implementations, dedicated cores can be any computer processing capability used by an order handler process associated with a sponsoring entity to execute orders received from the sponsoring entity, such that there are restrictions on other order handler processes that can use the computer processing capability during the time the order handler process uses the computer processing capability.

In some implementations, a dedicated core is used by an order handler process associated with a sponsoring entity to process orders received from the sponsoring entity for a specified period of time. In some implementations, the specified period of time can be one day. For example, the system can receive an indication from a sponsoring entity that each of the orders received by the system from the sponsoring entity is to be executed on a dedicated core. In response, using the techniques described below, the system can designate one of the cores 114 as a dedicated core and assign the dedicated core to an order handler process associated with the sponsoring entity. The order handler process to which the dedicated core is assigned executes orders received from the sponsoring entity on the dedicated core for the specified period of time. Additionally, for the specified period of time, there is a restriction on which order handler processes included in the system can execute orders on the dedicated core. For example, the restriction can be that no other order handler processes (e.g., besides the order handler process to which the dedicated core is assigned) included in the system execute orders on the dedicated core during the specified period of time. For example, the restriction can be that only order handler processes associated with the same sponsoring entity (e.g., as the one associated with the order handler process to which the dedicated core is assigned) execute orders on the dedicated core during the specified period of time.

Once the specified period of time lapses, the dedicated core is no longer assigned to the order handler process. The system can then designate a new core as a dedicated core and assign the new core to the order handler process associated with the sponsoring entity. The new core can be different from the previously designated core, or the new core can be the same as the previously designated core. The order handler process then executes orders received from the sponsoring entity on the new core for the specified period of time, and there is a restriction on which order handler processes included in the system can execute orders on the new core for the specified period of time. For example, the restriction can be that no other order handler processes included in the system (e.g., besides the order handler process to which the new core is assigned) execute orders on the new core for the specified period of time. For example, the restriction can be that only order handler processes associated with the same sponsoring entity (e.g., as the one associated with the order handler process to which the new core is assigned) execute orders on the new core during the specified period of time.

This cycle of reassigning a core to the order handler process associated with the sponsoring entity that has indicated a desire for its orders to be processed on dedicated cores can continue for any suitable number of lapses of the specified period of time. For example, the cycle can continue until the system receives from the sponsoring entity an indication that each of its orders is no longer to be executed on a dedicated core.

In some implementations, each server of the set of servers 104 includes a first fixed number of cores. The first fixed number can be any suitable number. In some implementations, the first fixed number can be 32.

In some implementations, the OS 108 of each server of the set of servers 104 runs on a second fixed number of cores of the server. For example, the OS 108 uses the second fixed number of cores to perform its operations. The second fixed number can be any suitable number. In some implementations, the second fixed number can be 2. Order handler processes 112 assigned to the server can process orders using cores on the server that are different from the cores on which the OS 108 of the server is running.

In some implementations, for each of one or more servers of the set of servers 104 that includes at least one dedicated core, all order handler processes 112 executing orders on the server execute orders on dedicated cores. In such implementations, the server manager 106 of the server can communicate to the set of web tools 102 that all order handler processes 112 executing orders on the server execute orders on dedicated cores.

The set of web tools 102 determines that a core of the cores 114 included in the order processing system 100 is to be designated as a dedicated core. In some implementations, the core that the set of web tools 102 determines is to be designated as a dedicated core can include one or more cores. The core is included in a plurality of cores of a server of the set of servers 104.

The set of web tools 102 can determine that the core is to be designated as a dedicated core in response to receiving an indication from a sponsoring entity that orders sent to the order processing system 100 by the sponsoring entity are to be processed on dedicated cores. The determination that the core is to be designated as a dedicated core can include a determination that the core is to be assigned to an order handler process associated with the sponsoring entity from which the indication was received, such that the order handler process executes orders on the core for the specified period of time.

For example, a sponsoring entity can send the indication to the system based on a desire that the system utilize a fixed proportion of the processing power of a single core in processing its orders, e.g., if the orders are complex, require high processing speeds, or both. For example, a sponsoring entity can send the indication to the system based on a desire for transparency with respect to the processing of its orders by the system, e.g., so that the sponsoring entity can have assurance that its orders are being processed on dedicated cores and an awareness of the specific dedicated cores on which the orders are being processed.

In some implementations, the set of web tools 102 determines that the core of the server is to be designated as a dedicated core by identifying the server from among the set of servers 104. The set of web tools 102 can identify the server using any of a number of factors. The set of web tools 102 can identify the server based on data related to one or more orders received by order handler processes executing orders on cores of the set of servers 104. The data can be generated by server managers of the servers 104. The set of web tools 102 can identify the server based on data related to one or more servers generated by the server managers of the one or more servers. For example, the set of web tools 102 can use communications that it receives from each respective server manager 106 on each of one or more servers of the set of servers 104. The communications can include data about one or more orders received by order handler processes executing orders on cores on each server, data related to each server, or both.

For example, the respective server manager 106 of each of one or more servers 104 can communicate to the set of web tools 102 that all order handler processes 112 executing orders on the server 104 execute orders on dedicated cores, as described above. The set of web tools 102 can use these communications to identify the server by identifying the server to be one of the servers from which it received such a communication.

For example, the server manager 106 of each server of the set of servers 104 can monitor the status of the cores 114 on the server and communicate information regarding the status of the cores 114 on the server to the set of web tools 102. For example, the server manager 106 of a server 104 can determine that one or more of the cores on the server are executing large quantities of orders, such that the quantities of orders that the cores are executing is near the maximum number of orders that the cores are able to execute. The server manager 106 can communicate this determination to the set of web tools 102. The set of web tools 102 can use this communication to identify the server by identifying the server to be one other than a server from which it receives such a communication, e.g., to help balance workloads among the set of servers 104.

As another example, the server manager 106 of a server 104 can determine that one or more of the cores 114 on the server are malfunctioning. The server manager 106 can communicate this determination to the set of web tools 102. The set of web tools 102 can use this communication to identify the server by identifying the server to be one other than a server from which it receives such a communication, e.g., to avoid designation of a core that is malfunctioning as a dedicated core.

The set of web tools 102 can identify the server based on data related to the status of each of the one or more downstream processors 116 that is generated by the downstream processors 116. The downstream processors 116 can communicate the generated data to the set of web tools 102, and the set of web tools 102 can use the communications from the one or more downstream processors 116 to identify the server. The set of web tools 102 can have access to a mapping that indicates the downstream processors 116 to which each server in the set of servers 104 is connected. For example, in the example of FIG. 1, the mapping can indicate that the server 104a is connected to at least the downstream processor 116A and that the server 104b is connected to at least the downstream processor 116n. The set of web tools 102 can use this mapping in combination with communications that it receives from one or more downstream processors 116 in identifying the server.

For example, the set of web tools 102 can receive communications from one or more downstream processors of the downstream processors 116 included in the system 100. The communication can indicate that the one or more downstream processors are receiving large quantities of results to be processed from the set of servers 104 such that the quantities of results that the one or more downstream processors are receiving are near the maximum number of results that the one or more downstream processors are able to process. The set of web tools 102 can check the mapping to infer that the servers of the set of servers 104 that are connected to the downstream processors that sent the communication are processing a large quantity of orders. The set of web tools 102 can then use this information to identify the server by identifying the server to be one other than a server that it has inferred to be processing a large quantity of orders, e.g., to help balance workloads among the servers 104.

After determining that a core of a particular server is to be designated as a dedicated core and identifying the server, the set of web tools 102 can send a communication to the server manager 106 of the identified server indicating that a core of the server is to be designated as a dedicated core. The server manager 106 then designates a core at the server as a dedicated core.

The server manager 106 can designate the core based on data related to the one or more cores 114 of the server. For example, the server manager 106 can collect data from the one or more cores 114 and use the collected data to designate the core. For example, the data can indicate that one or more of the cores are malfunctioning. The server manager 106 can designate a core that is not one or more of the cores indicated by the data to be malfunctioning, e.g., to avoid designating a core that is malfunctioning as a dedicated core.

For example, the data can indicate that one or more of the cores are executing large quantities of orders, such that the quantities of orders that the one or more cores are executing is near the maximum number of orders that the cores are able to execute. The server manager 106 can designate a core that is not one or more of the cores indicated by the data to be executing a large quantity of orders.

The server manager 106 can designate the core based on a randomization algorithm. The randomization algorithm can be configured to avoid assignment of a particular core on the server to an order handler process associated with a particular entity more than a threshold number of times within a given time period. The purpose of the randomization algorithm can be to account for potential variations between different cores on the server.

For example, if a particular core has a slower processing speed than the other cores on the server, orders executed on that particular core will be executed more slowly than the orders executed on the other cores on the server. This can negatively impact the sponsoring entity associated with the order handler process executing orders on the particular core, as most sponsoring entities desire optimizing the speed at which their orders are executed.

This negative impact of slower processing speeds can accumulate. For example, a core with slower processing speeds can be frequently assigned to an order handler process associated with a sponsoring entity, e.g., if the server manager reassigns the core to the same order handler process after the lapse of each specified period of time for which an order handler process is assigned to a dedicated core. The randomization algorithm employed by the server manager 106 can help to prevent frequent assignment of a particular core to a particular order handler process associated with a sponsoring entity, thereby reducing a likelihood of the negative impact accumulating for the sponsoring entity.

Additionally, even if variations between cores on the server are negligible, it can still be advantageous to employ a randomization algorithm to protect sponsoring entities from the risk of potential undetected or unreported variations between cores, or future potential variations between cores that may develop (e.g., if a core breaks down or malfunctions).

After designating the core as a dedicated core, the server manager 106 assigns the dedicated core to the order handler process associated with the sponsoring entity such that the order handler process executes orders on the dedicated core for the specified period of time.

In some implementations, if a sponsoring entity does not transmit an indication to the order processing system 100 that orders sent to the order processing system 100 by the sponsoring entity are to be processed on dedicated cores, the order processing system 100 can skip assigning each of the order handler processes 112 associated with the sponsoring entity to a core of the cores 114 included in the order processing system 100 such that each of the order handler processes 112 associated with the sponsoring entity execute orders on the core for the specified period of time.

The order handler processes 112 of the order processing system 100 receive orders transmitted to the order processing system 100 by sponsoring entities. In some implementations, the order handler processes 112 receive orders directly from sponsoring entities. In some implementations, the set of web tools 102 receives orders from the sponsoring entities, and then transmits the orders to the order handler processes associated with the sponsoring entities from which the orders are received.

After an order handler process receives an order, if the order handler process is associated with a sponsoring entity that has not sent an indication to the order processing system 100 that each of its orders is to be executed on a dedicated core, the OS 108 of the server to which the order handler process is assigned identifies a core on which the order handler process is to execute the received order.

For example, the kernel 110 of the OS 108 can receive a communication from the server on which the OS 108 is located that an order handler process assigned to the server has received an order. In response, the OS 108 can identify a core on the server on which the order handler process is to execute the received order. For example, the OS 108 can identify the core based on a number of factors, including data related to the one or more cores of the server or a randomization algorithm, as described above.

The OS 108 can also base its identification of the core on the nature of the order received by the order handler process. For example, the core can be identified such that orders that are duplicates or similar in nature can be executed on the same core to take advantage of economies of scale, helping to increase the efficiency with which the system processes orders. After the OS 108 identifies a core on which the order handler process is to execute the received order, the order handler process executes the received order on the identified core.

After an order handler process receives an order, if the order handler process is associated with a sponsoring entity that has sent an indication to the order processing system 100 that each of its orders is to be executed on a dedicated core, the order processing system 100 identifies the core on which the order handler process is to execute the received order as the dedicated core assigned to the order handler process (e.g., according to the techniques described above). The OS 108 of the server to which the order handler process is assigned skips identifying a core on which the order handler process is to execute the received order. The order handler process executes the order on the core that has been assigned to the order handler process by the order processing system 100 using the techniques described above.

Skipping identification of a core by the OS 108 in this way can reduce latency, reduce a number of computational resources used by the order processing system 100, or both, by reducing a number of communications between components of the order processing system 100. For example, skipping identification of a core by the OS 108 can reduce a number of communications to and from the OS 108.

Once the received order has been executed by the order handler process, results of the executed order are transmitted to the one or more downstream processors 116 included in the system. The one or more downstream processors 116 can then further process the results to produce a final output.

For example, if the order processing system 100 is a global weather simulation system, the results of the processed orders can be the results of calculations that were carried out by one or more of the cores 114 on one or more of the servers 104, which are relevant to predicting weather patterns. Upon receiving the results of the calculations, the one or more downstream processors 116 can input the results to a weather simulation program that uses the results to create simulations of weather patterns and/or predict future weather patterns.

As another example, if the order processing system 100 is a system for processing orders to exchange financial instruments, the results of the processed orders can be orders that have been matched. The downstream processors 116 can be entities that settle trades of financial instruments on a given financial exchange. Upon receiving the matched orders, the trade settling entities can settle the trades according to the matched orders.

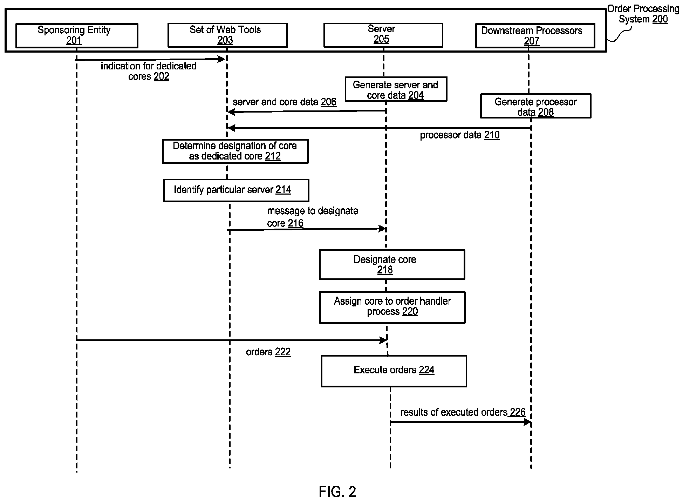

FIG. 2 is a flow diagram illustrating interactions between components of an order processing system 200 during an example process for designating cores. The order processing system 200 includes a set of web tools 203, a server 205, and downstream processors 207. The server 205 can be one of one or more servers included in the system 200. The order processing system 200 can be any suitable order processing system that implements dedicated cores. For example, the order processing system can be the order processing system 100 of FIG. 1.

A sponsoring entity 201 sends an indication to the order processing system 200 that orders sent to the order processing system 200 by the sponsoring entity are to be processed on dedicated cores (stage 202). The indication can be received and processed by the set of web tools 203.

The server 205 includes a server manager (not shown in figure). One or more order handler processes (not shown in figure) can be assigned to the server 205, as described with reference to FIG. 1. The server 205 includes cores (not shown in figure) on which order handler processes that are assigned to the server 205 execute orders, as described with reference to FIG. 1.

The server manager of the server 205 generates data related to the server 205, as well as the cores operating on the server 205 (stage 204). The data can include whether or not all order handler processes executing orders on the server 205 execute orders on dedicated cores; quantities of orders being executed on the cores of the server 205; the status of cores of the server 205; and/or the current processing speed of the cores of the server 205. The respective server manager of each of the one or more servers included in the system can similarly generate data related to the server and the cores operating on the server.

Upon generating the data related to the server 205 and the cores operating on the server 205, the server manager of the server 205 transmits these server and core data to the set of web tools 203 (stage 206). The respective server manager of each of the one or more servers included in the system can similarly transmit the respective data generated by each of the one or more servers to the set of web tools 203.

The downstream processors 207 generate data related to the status of each of the downstream processors 207 (stage 208). The data related to the status of each downstream processor can include the number of results received for further processing by the downstream processor from the one or more servers of the system; the identity of one or more servers from which the downstream processor receives results; limitations on the number of results to be processed on the downstream processor; and/or the current operating speed of the downstream processor. The data can also include a mapping that indicates the downstream processors of the downstream processors 207 to which each server included in the system is connected.

Upon generating the data related to the status of each downstream processor, the downstream processors 207 transmit these processor data to the set of web tools 203 (stage 210).

The set of web tools 203 determines that a core of a server is to be designated as a dedicated core (stage 212). The set of web tools 203 can determine that the core of the server is to be designated as a dedicated core in response to receiving the indication from the sponsoring entity 201 that orders sent to the order processing system 200 by the sponsoring entity 201 are to be processed on dedicated cores, e.g., at stage 202.

Based on determining that a core of a server is to be designated as a dedicated core, the set of web tools 203 identifies the server (stage 214). The set of web tools 203 can use the server and core data that it receives from the server managers of the one or more servers, such as the server 205 at stage 206, in identifying the server. Additionally, the set of web tools 203 can use the processor data that it receives from the downstream processors 207, e.g., at stage 210, in identifying the server. The manner in which the set of web tools 203 can use these data is described in further detail above with reference to FIG. 1. In the example of FIG. 2, the set of web tools identifies the server to be the server 205.

The set of web tools 203 transmits a message to the server manager of the identified server 205 (stage 216). The message can indicate to the server manager that a core of the server 205 is to be designated as a dedicated core.

In response to receiving the message from the set of web tools 203, the server manager of the server 205 designates a core at the server 205 as a dedicated core (stage 218). The server manager of the server 205 can use data relating to cores on the server 205 in designating the core. The manner in which the server manager can use these data is described in further detail above with reference to FIG. 1.

Once the core has been designated as a dedicated core by the server manager of the server 205, the server manager of the server 205 assigns the dedicated core to an order handler process assigned to the server 205 and associated with the sponsoring entity 201, such that the order handler process executes orders on the dedicated core (stage 220).

Once the dedicated core has been assigned to an order handler process, the order handler process can receive orders from the sponsoring entity 201 at the server 205 (stage 222). In some implementations, the set of web tools 203 first receives the orders and then transmits the orders to the order handler process.

The order handler process executes the orders on the core that has been assigned to it (stage 224). In some implementations, the execution of the orders by the order handler process can include bypassing the identification of a core by an operating system of the server 205, as described with reference to FIG. 1. For example, the order processing system 200 can skip an operation in which an operating system of the server 205 identifies a core on which the order handler process is to execute the order because the order handler process has already been assigned to a dedicated core. The order processing system 200 can identify the core on which the order handler process is to execute the order as the core assigned to the order handler process, e.g., at stage 220.

The results of the executed orders are transmitted to the downstream processors 207 for further processing (stage 226). For example, the downstream processors 207 can further process the results of the executed order to produce a final output, e.g., as described above with reference to FIG. 1.

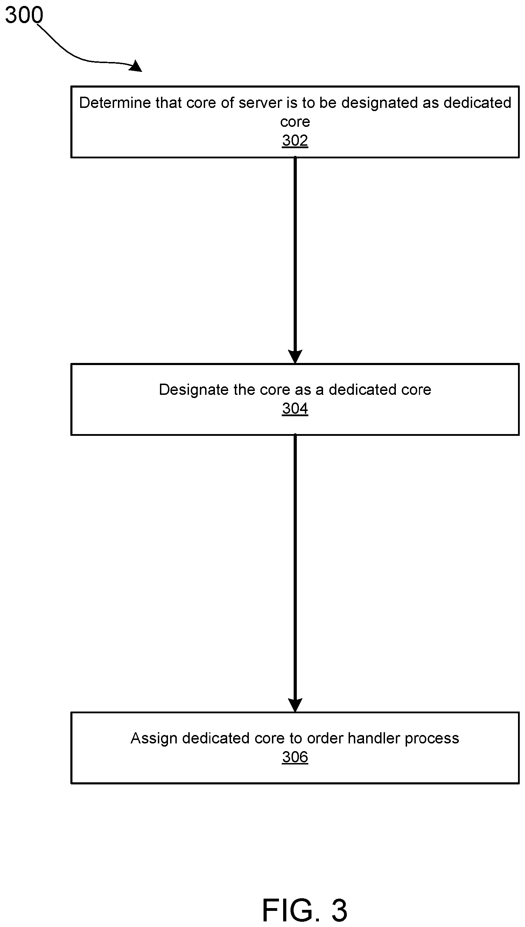

FIG. 3 is a flow diagram of an example process 300 for designating cores. For convenience, the process 300 will be described as being performed by a system of one or more computers located in one or more locations. The system can include a set of servers used for processing orders, with each server in the set including cores on which orders are executed. The system can include one or more order handler processes that are each assigned to a server and execute orders on the cores of the server. For example, an order processing system, e.g., the order processing system 100 of FIG. 1, appropriately programmed in accordance with this specification, can perform the process 300.

The system determines that a core of a plurality of cores of a server is to be designated as a dedicated core (302). As described in further detail above with reference to FIG. 1, a dedicated core is a core that is used by an order handler process associated with a sponsoring entity to process orders received from the sponsoring entity. In some implementations, a dedicated core is used by an order handler process associated with a sponsoring entity to process orders received from the sponsoring entity for a specified period of time, for example, one day. During the specified period of time, there can be one or more restrictions on other order handler processes that can use the dedicated core, e.g., no other order handler processes can be able to use the dedicated core.

The system can make the determination in response to receiving an indication from a sponsoring entity that orders sent to the system by the sponsoring entity are to be executed by the system on dedicated cores.

In some implementations, the system determines that a core of a plurality of cores of a server is to be designated as a dedicated core by identifying the server from among one or more servers included in the system. The system can identify the server based on one or more orders received by order handler processes executing orders on cores of the one or more servers. The system can identify the server based on data related to the one or more servers. The system can identify the server based on communications from one or more downstream processors that process the results of orders that are executed by order handler processes of the system. The system can identify the server based on a mapping indicating connections between the one or more servers and one or more downstream processors.

The identification of the server as described above can allow the system to identify the server in such a way as to optimize the efficiency with which the system processes orders. For example, the system can use information relating to the status of its various components, such as the servers and the downstream processors included in the system, as well as how these various components interact with one another, to determine a designation of cores that will optimize the efficiency of the system.

The system designates the core as a dedicated core (304). The system designates the core based on determining that a core of the server is to be designated as a dedicated core.

In some implementations, the system designates the core based on data related to one or more cores of the particular server. The designation of the core as a dedicated core based on this data can allow the system to designate the core in such a way as to optimize the efficiency with which the system processes orders. For example, the system can use information relating to the status of the cores on the server to designate the core in a way that will optimize the efficiency of the system.

In some implementations, the system designates the core as a dedicated core based on a randomization algorithm. The randomization algorithm can reduce a likelihood that the order handler process to which the dedicated core is assigned, as described below, gets assigned the same dedicated core for an extended period of time. In this way, the randomization algorithm can increase the efficiency with which the system processes orders by spreading the distribution of the workload of the system more evenly among the dedicated cores of the system. For example, a dedicated core can be less likely to execute orders for an extended period of time, e.g., longer than the specified period of time, from a sponsoring entity that tends to send orders that are particularly complex or large. Likewise, a sponsoring entity can be less likely to have its orders executed on the same dedicated core for an extended period of time, e.g., longer than the specified period of time, which can improve the efficiency with which its orders are executed if, e.g., some dedicated cores have slower processing speeds than others.

The system assigns the dedicated core to an order handler process (306). The order handler process to which the dedicated core is assigned is associated with the sponsoring entity from which the system received the indication that orders sent to the system by the sponsoring entity are to be executed by the system on dedicated cores. As explained above with reference to FIG. 1, the assignment of the order handler process to the dedicated core results in the order handler process executing orders on the dedicated core.

The assignment of the dedicated core to an order handler process can help to reduce latency, enhance throughput and improve performance of the system because the system can utilize a fixed proportion of the processing power of the dedicated core to process orders received by the order handler process. For example, the fixed proportion can be a majority of the processing power of the dedicated core, or the full processing power of the dedicated core. The system can process orders for which it utilizes a fixed proportion of the processing power of the dedicated core more efficiently (e.g., in less time or with reduced latency) than it can process orders that are not processed on dedicated cores. For example, the system may not be able to use a sufficiently large proportion of the processing power of a core to process orders that are not processed on dedicated cores, which can result in longer processing times for such orders, increase latency in processing such orders, or both.

Certain orders that are large or complex in nature can benefit from being processed with a greater percentage of the power of a core. Additionally, sponsoring entities sending orders to the order processing system might desire to have a larger percentage of the processing power of a core devoted to processing their orders. For example, sponsoring entities may desire this in order to ensure that the order is processed in a timely fashion and without the risk of being subordinated to orders from other users of the system being processed on the same core.

The assignment of the dedicated core to an order handler process can improve transparency to the sponsoring entity associated with the order handler process. For example, the sponsoring entities can have assurance that their orders are being processed on dedicated cores and an awareness of specific dedicated cores on which the orders are being processed.

In some implementations, after assigning the dedicated core to the order handler process, the order handler process can receive an order from the sponsoring entity. The system can then determine that the order handler process is to execute the received order on the dedicated core, based on the assignment of the dedicated core to the order handler process. In some implementations, this determination can include skipping, by an operating system of the particular server, identification of a core on which to execute the order, as described above with reference to FIG. 1.

Bypassing the operating system of the particular server in identifying the core in this way can enhance the efficiency with which the system processes orders by reducing a number of communications between components of the system (e.g., communications to and from the operating system of the server), reducing a number of operations performed by the system, or both, as the system processes orders to be executed on the dedicated core. For example, bypassing the operating system of a server in identifying the core in this way can reduce latency and increase throughput for orders that are processed by the system on the dedicated core.

In some implementations, in response to receiving an indication from a sponsoring entity that orders sent to the system by the sponsoring entity are to be executed by the system on dedicated cores, the system can determine that one or more cores of one or more servers are to be designated as dedicated cores. The system can designate each of the one or more cores on the one or more servers as dedicated cores, as described above. The system can assign one or more order handler processes associated with the sponsoring entity to the one or more dedicated cores, as described above.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate set) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
determining that a core of a plurality of cores of a server is to be designated as a dedicated core;
based on determining that the core of the plurality of cores of the server is to be designated as a dedicated core, designating the core of the plurality of cores of the server as the dedicated core; and
assigning the dedicated core to an order handler process associated with a sponsoring entity, wherein the dedicated core is (i) used by the order handler process associated with the sponsoring entity to process orders received from the sponsoring entity, and (ii) not shared by order handler processes associated with non-sponsoring entities.

2. The method of claim 1, comprising:
receiving, by the order handler process, an order from the sponsoring entity;
determining that the order handler process is to execute the received order on the dedicated core, comprising:
skipping identification of a core on which to execute the order by an operating system of the server.

3. The method of claim 1 or 2, wherein determining that a core of a plurality of cores of a server is to be designated as a dedicated core comprises identifying the server from among one or more servers.

4. The method of claim 3, wherein identifying the server from among one or more servers comprises:
identifying the server based on one or more orders received by order handler processes executing orders on cores of the one or more servers, and/or
identifying the server based on data related to the one or more servers, and/or
identifying the server based on communications from one or more downstream processors, and/or
identifying the server based on a mapping indicating connections between the one or more servers and one or more downstream processors.

5. The method of any of claims 1 to 4, wherein all order handler processes executing orders on the server execute orders on dedicated cores.

6. The method of any of claims 1 to 5, wherein designating the core of the plurality of cores of the as the dedicated core comprises:
designating the core based on data related to one or more cores of the server, and/or
designating the core based on a randomization algorithm.

7. The method of any of claims 1 to 6, wherein a dedicated core is used by the order handler process associated with the sponsoring entity to process orders received from the sponsoring entity for a specified period of time, and, optionally, wherein the specified period of time is one day.

8. A system comprising one or more computers and one or more storage devices on which are stored instructions that are operable, when executed by the one or more computers, to cause the one or more computers to perform operations comprising:
determining that a core of a plurality of cores of a server is to be designated as a dedicated core;
based on determining that the core of the plurality of cores of the server is to be designated as a dedicated core, designating the core of the plurality of cores of the server as the dedicated core; and
assigning the dedicated core to an order handler process associated with a sponsoring entity, wherein the dedicated core is (i) used by the order handler process associated with the sponsoring entity to process orders received from the sponsoring entity, and (ii) not shared by order handler processes associated with non-sponsoring entities.

9. The system of claim 8, wherein the operations comprise:
receiving, by the order handler process, an order from the sponsoring entity;
determining that the order handler process is to execute the received order on the dedicated core, comprising:
skipping identification of a core on which to execute the order by an operating system of the server.

10. The system of claim 8 or 9, wherein determining that a core of a plurality of cores of a server is to be designated as a dedicated core comprises identifying the server from among one or more servers.

11. The system of any of claims 8 to 10, wherein all order handler processes executing orders on the server execute orders on dedicated cores.

12. The system of any of claims 8 to 11, wherein designating the core of the plurality of cores of the as the dedicated core comprises:
designating the core based on a randomization algorithm.

13. The system of any of claims 8 to 12, wherein a dedicated core is used by the order handler process associated with the sponsoring entity to process orders received from the sponsoring entity for a specified period of time.

14. One or more non-transitory computer-readable storage media encoded with computer program instructions that when executed by one or more computers cause the one or more computers to perform operations comprising:
determining that a core of a plurality of cores of a server is to be designated as a dedicated core;
based on determining that the core of the plurality of cores of the server is to be designated as a dedicated core, designating the core of the plurality of cores of the server as the dedicated core; and
assigning the dedicated core to an order handler process associated with a sponsoring entity, wherein the dedicated core is (i) used by the order handler process associated with the sponsoring entity to process orders received from the sponsoring entity, and (ii) not shared by order handler processes associated with non-sponsoring entities.

15. The one or more transitory computer-readable storage media of claim 14, wherein the operations comprise:
receiving, by the order handler process, an order from the sponsoring entity;
determining that the order handler process is to execute the received order on the dedicated core, comprising:
skipping identification of a core on which to execute the order by an operating system of the server.
